# EUROPEAN PATENT APPLICATION

(11) **EP 3 971 705 A1**
(43) Date of publication of application: **23.03.2022**
(21) Application number: 20867592.6
(22) Date of filing: 28.09.2020
(51) Int. Cl.: G06F 8/35

(54) **HARDWARE MANAGEMENT METHOD, TERMINAL, AND STORAGE MEDIUM**

(30) Priority: 29.09.2019 CN 201910936456
(71) Applicant: ZTE Corporation, Shenzhen, Guangdong 518057 (CN)
(72) Inventor: YU, Jun, Shenzhen, Guangdong 518057 (CN)
(74) Representative: Betten & Resch
(86) International application number: PCT/CN2020/118552
(87) International publication number: WO 2021/058015

(57) **Abstract**

Disclosed are a hardware management method, a terminal, and a storage medium. The terminal sets corresponding user interfaces for management users with different management scales, and the largest hardware management objects on the user interfaces corresponding to at least two management scales are different. For the management users with a small management scale, on the user interfaces corresponding thereto, there is no need to present function items corresponding to large hardware management objects that may not be used. In addition, for the management users with a large management scale, a user interface with a large hardware management object can be used to perform hardware management to satisfy hardware management requirements of these management users with a large management scale.

## Description

### CROSS-REFERENCE TO RELATED APPLICATION

The present application claims priority of Chinese patent application No. CN201910936456.1 entitled "HARDWARE MANAGEMENT METHOD, TERMINAL, AND STORAGE MEDIUM" and filed on September 29, 2019, the content of which is incorporated herein by reference in its entirety.

### TECHNICAL FIELD

The present application relates to the field of communication, and in particular, to a hardware management method, a terminal, and a storage medium.

### BACKGROUND

In the field of communication, different users have different communication requirements. For example, some users only need to use communication devices, while others need to set up multiple Points of Deployment (PODs). Therefore, different users have different management scales for hardware management. Users with a large management scale may use more and more professional hardware management knowledge when managing their communication hardware, such as POD construction and POD management, while users with a small management scale do not need to understand POD and other professional concepts. However, due to the fact that the industry has no substantively divided management scales for users, in an existing hardware management system, in order to meet hardware management requirements of all users, a user interface may be designed according to requirements of users with a large management scale. Users with a small management scale can also realize their communication hardware management through the user interface. However, there are many function items on the user interface that the users do not understand, are not familiar with, or even cannot use temporarily. As a result, it is difficult for the users with the small management scale to manage communication hardware, leading to poor user experience.

### SUMMARY

Embodiments of the present application provide a hardware management method, a terminal, and a storage medium, mainly to solve the following problems that user interfaces of the existing hardware management system are designed uniformly according to requirements of users with a large management scale, which is not friendly to other users, leading to difficult management for some users and poor user experience.

In order to solve the above technical problems, according to the embodiments of the present application, a hardware management method is provided, including:
receiving a display instruction for a user interface of a hardware management system, the display instruction being configured to instruct displaying the user interface of the hardware management system to a current management user; and
displaying, according to the display instruction, the user interface of the hardware management system matching with a management scale of the management user for the management user to perform hardware management, at least two management scales corresponding to different largest hardware management objects on user interfaces.

According to the embodiments of the present application, a terminal is further provided, including a processor, a memory, and a communication bus.

The communication bus is configured to communicate the processor with the memory.

The processor is configured to execute one or more programs stored in the memory, to perform steps of the hardware management method described above.

According to the embodiments of the present application, a storage medium is further provided, where the storage medium stores one or more programs which, when executed by one or more processors, cause the one or more processors to perform steps of the hardware management method described above.

Other features and corresponding beneficial effects of the present application will be set forth in part in the description which follows, and it is to be understood that the beneficial effects in part will become apparent from the disclosure in the description of the present application.

### BRIEF DESCRIPTION OF DRAWINGS

FIG. 1 is a flowchart of a hardware management method according to Embodiment one of the present application;
FIG. 2 is a flowchart of receiving a display instruction through a requirement guidance interface according to Embodiment one of the present application;
FIG. 3 is a schematic diagram of the requirement guidance interface according to Embodiment one of the present application;
FIG. 4 is another schematic diagram of the requirement guidance interface according to Embodiment one of the present application;
FIG. 5 is yet another schematic diagram of the requirement guidance interface according to Embodiment one of the present application;
FIG. 6 is a schematic diagram of a user interface corresponding to a first-level management scale according to Embodiment one of the present application;
FIG. 7 is a schematic diagram of a user interface corresponding to a second-level management scale according to Embodiment one of the present application;
FIG. 8 is another schematic diagram of the user interface corresponding to the first-level management scale according to Embodiment one of the present application;
FIG. 9 is a flowchart of a hardware management method according to Embodiment two of the present application;
FIG. 10 is a schematic diagram of a requirement guidance interface according to Embodiment two of the present application; and
FIG. 11 is a schematic diagram of a hardware structure of a terminal according to Embodiment three of the present application.

### DETAILED DESCRIPTION

In order to make objects, technical schemes and advantages of the present application more comprehensible, the embodiments of the present application are described in further detail below through specific embodiments in conjunction with the drawings. It is to be understood that specific embodiments described herein are intended only to interpret the present application and not intended to limit the present application.

### Embodiment one

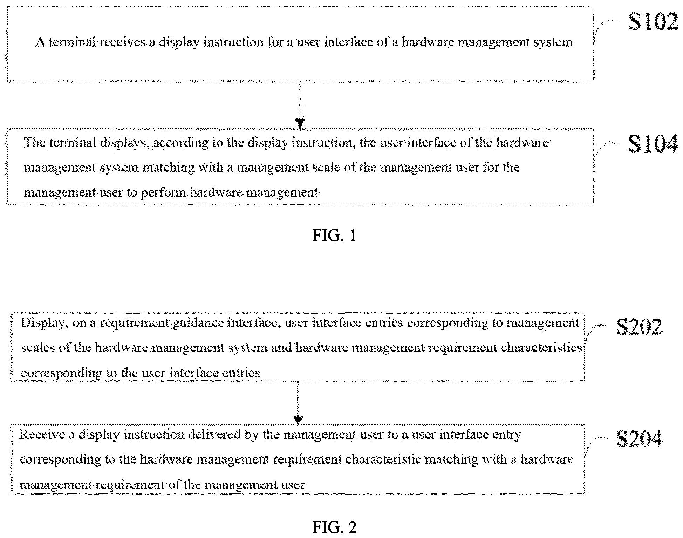

In the existing hardware management system, the user interface is designed according to hardware management requirements of management users with a large management scale, which results in that management users with a small management scale need to find required function items from many unknown and unnecessary function items when accessing the user interface for hardware management, leading to inconvenient hardware management. Moreover, the management users with a small management scale are susceptible to interference from too professional function items on the user interface, which increases the difficulty in hardware management for such management users. In order to solve the above problems, this embodiment provides a hardware management method, as shown in FIG. 1 which is a flowchart of the hardware management method, including the following steps S 102 and S 104.

At step S102, a terminal receives a display instruction for a user interface of a hardware management system.

The hardware management system may be deployed on a terminal, such as a desktop or a laptop. In some implementations, the hardware management system may also be designed as an Application (APP), so as to be deployed on a tablet computer, a mobile phone and other mobile devices.

The terminal receives a display instruction delivered by a management user for a user interface of the hardware management system. The display instruction instructs the terminal to display the user interface of the hardware management system. In this embodiment, the hardware management system is configured with user interfaces for users with different management scales, and at least two management scales corresponding to different user interfaces. Here, the differences between the user interfaces mainly lie in that the largest hardware management objects on the user interfaces are different. The so-called "the largest hardware management object" refers to a hardware object at the highest level that can be managed by a management user on a user interface, or the largest hardware object formed by all communication hardware that can be managed by the management user on the user interface. For example, one or more line cards may form a communication device, one or more communication devices may form a POD, more than two PODs may form a POD set (or POD group), and so on. Therefore, the communication device has a higher level than the line card, and the POD has a higher level than the communication device, and the POD set has a higher level than the POD. Assuming that on a user interface, the management user manages each line card in a communication device, the largest hardware management object corresponding to the user interface is the communication device. Assuming that on a user interface, the management user can manage multiple PODs, the largest hardware management object corresponding to the user interface is a POD set.

In some implementations of this embodiment, the management scale is divided into a first-level management scale and a second-level management scale larger than the first-level management scale. Therefore, the second-level management scale is actually a larger management scale, and the first-level management scale is a smaller management scale. Since the largest hardware management objects on user interfaces corresponding to at least two management scales are different, in this implementation, the largest hardware management objects are different on user interfaces corresponding to the second-level management scale and the first-level management scale. In some implementations, the largest hardware management object on the user interface corresponding to the second-level management scale may be a POD set, while the largest hardware management object on the user interface corresponding to the first-level management scale may be a POD.

It may be understood that, in some other implementations of this embodiment, the management scale may be divided into more categories rather than two. In some implementations of this embodiment, the management scale may be divided into a first-level management scale, a second-level management scale, ... and an N^{th}-level management scale in an ascending order, where N is greater than 2. These management scales may correspond to N user interfaces, of which at least two are different. In some implementations, the N user interfaces are different from one another. That is, the user interfaces corresponding to different management scales are different from one another, and the largest hardware management objects in different user interfaces are different.

At step S104, the terminal displays, according to the display instruction, the user interface of the hardware management system matching with a management scale of a management user for the management user to perform hardware management.

After receiving the display instruction, the terminal displays, according to the display instruction, a user interface of the hardware management system matching with a management scale of the current management user for the management user to perform hardware management. There is no doubt that the management scale of the current management user needs to be determined in advance before the terminal displays, according to the display instruction, the user interface matching with the management scale of the management user. In some implementations of this embodiment, the terminal may first receive a display instruction for a user interface of a hardware management system and then determine a management scale of a current management user according to the display instruction, which may refer to the flowchart shown in FIG. 2.

At step S202, user interface entries corresponding to management scales of the hardware management system and hardware management requirement characteristics corresponding to the user interface entries are displayed on a requirement guidance interface.

In some implementations, before receiving the display instruction, the terminal may first display the requirement guidance interface to the management user, to allow the current management user to determine according to the requirement guidance interface what user interface he/she should enter.

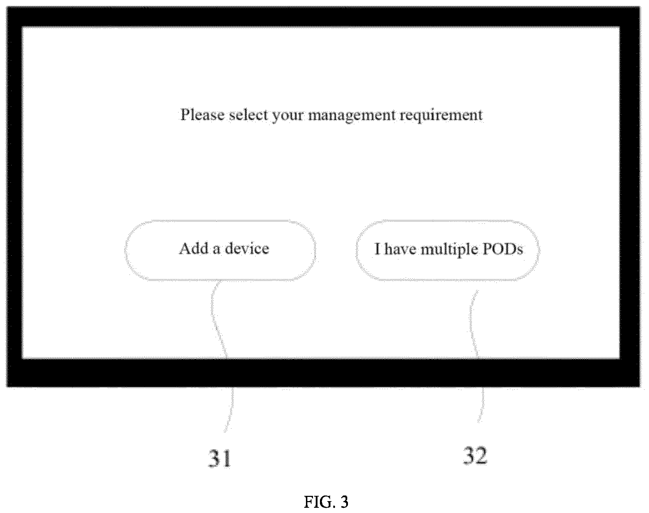

Referring to a schematic diagram of the requirement guidance interface shown in FIG. 3, user interface entries corresponding to various management scales are displayed on the requirement guidance interface. For example, in FIG. 3, there are two management scales, namely, a first-level management scale and a second-level management scale. The largest hardware management object of the first-level management scale is a POD, and the largest hardware management object of the second-level management scale is a POD set. Correspondingly, on the requirement guidance interface, a user interface entry corresponding to the first-level management scale is a first function item 31, and a user interface entry corresponding to the second-level management scale is a second function item 32. It is to be understood that, the first function item 31 may be operated to cause the hardware management system to jump to the user interface corresponding to the first-level management scale and the second function item 32 may be operated to cause the hardware management system to jump to the user interface corresponding to the second-level management scale. However, without corresponding prompts, the management user cannot determine what user interfaces the first function item 31 and the second function item 32 correspond to. Therefore, in this embodiment, in addition to displaying the user interface entries corresponding to the management scales, it is also necessary to display hardware management requirement characteristics corresponding to the user interface entries. For example, in FIG. 3, "Add a device" is displayed on the first function item 31, while "I have multiple PODs" is displayed on the second function item 32. In this way, the user may determine, according to hardware management requirement characteristics corresponding to the function items, which function item he/she should operate. For example, if a management user a has only one default POD, the management user, when performing hardware management, may add or delete a device in the POD although the largest management object is the POD. Therefore, after comparing the hardware management requirement characteristics corresponding to the two user interface entries on the requirement guidance interface, the management user a may determine that his/her hardware management requirement corresponds to the hardware management requirement characteristic corresponding to the first function item 31. Therefore, the management user a may operate the first function item 31 to deliver the display instruction.

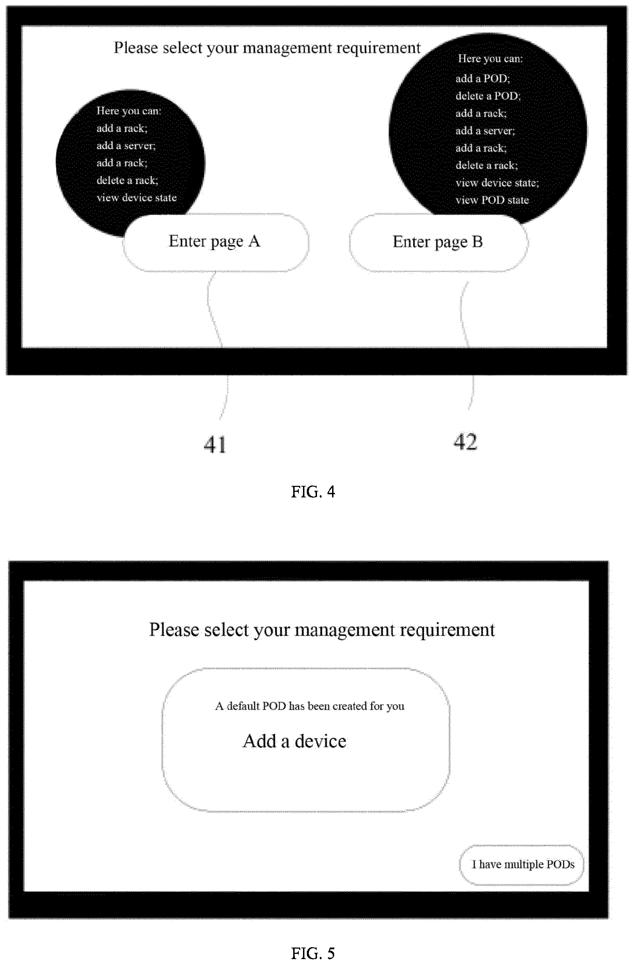

It is to be understood that, in some other implementations of this embodiment, the hardware management requirement characteristics corresponding to the user interface entries may be listed in more detail. For example, on the requirement guidance interface shown in FIG. 4, a hardware management requirement characteristic corresponding to the first function item 41 includes "Here you can: add a rack; add a server; add a rack; delete a rack; view device state", and a hardware management requirement characteristic corresponding to the second function item 42 includes "Here you can: add a POD; delete a POD; add a rack; add a server; add a rack; delete a rack; view device state; view POD state."

In FIG. 3 and FIG. 4, the terminal displays the user interface entries corresponding to various management scales on the requirement guidance interface in the same way. However, considering that management users with a small management scale are less professional, in some other implementations of this embodiment, when the terminal displays the user interface entries corresponding to various management scales on the requirement guidance interface, the user interface entry for a smaller management scale may be displayed more prominently, so that the management user with a small management scale can find an exact entry more easily. In this embodiment, the terminal may highlight the user interface entry for a smaller management scale in any one of the following manners.
(1) Compared with the user interface entry for a larger management scale, the user interface entry for the smaller management scale is displayed at a position closer to a center of the requirement guidance interface.
(2) Compared with the user interface entry for a larger management scale, the user interface entry for the smaller management scale is displayed at a larger size.
(3) Compared with the user interface entry for a larger management scale, the user interface entry for the smaller management scale is displayed in higher brightness.
(4) Compared with the user interface entry for a larger management scale, the user interface entry for the smaller management scale is displayed in a brighter color. For example, the user interface entry for the larger management scale may be displayed in blue or gray, while the user interface entry for the smaller management scale may be displayed in bright red or yellow.

It may be understood that, in order to display the user interface entry for the smaller management scale more prominently, when the terminal displays the user interface entries corresponding to the management scales on the requirement guidance interface, at least two of the above four manners may be used in combination. On the requirement guidance interface as shown in FIG. 5, compared with the user interface entry for the larger management scale, the user interface entry for the smaller management scale is displayed not only at a position closer to the center of the requirement guidance interface but also at a larger size.

At step S204, a display instruction delivered by the management user to a user interface entry corresponding to the hardware management requirement characteristic matching with a hardware management requirement of the management user is received.

By comparing his/her own hardware management requirement with the various hardware management requirement characteristics displayed on the requirement guidance interface, the management user may determine the user interface entry he/she should operate, and then delivers the display instruction to the user interface entry selected.

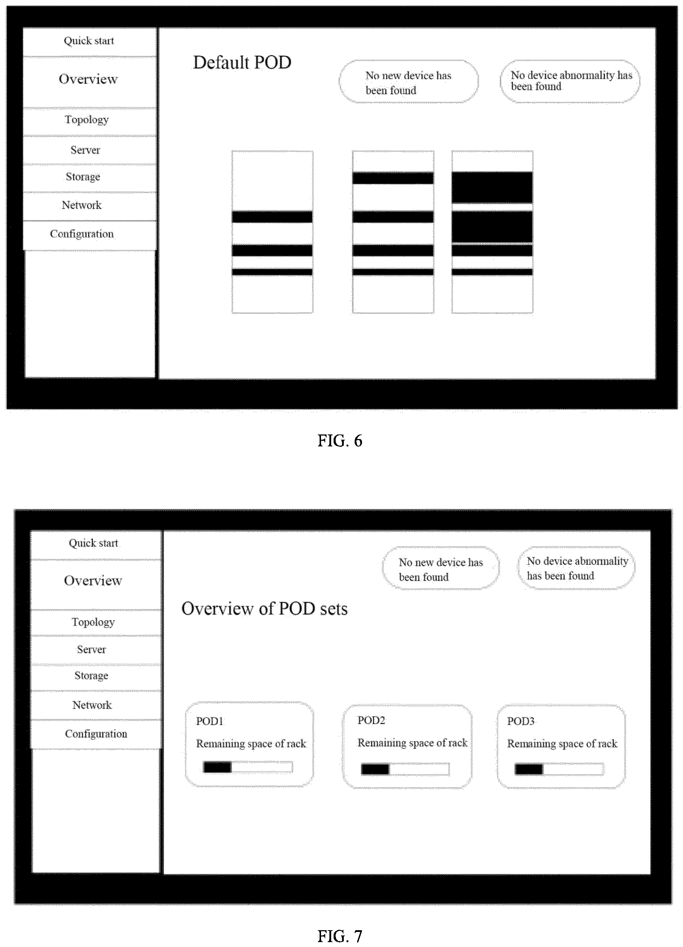

The terminal, after receiving the display instruction for the user interface of the hardware management system, may display, according to the display instruction, a user interface matching with a management scale of a current management user to the current management user. For example, for the management user with the first-level management scale, the user interface displayed by the terminal is as shown in FIG. 6. On the user interface, the management user may add or reduce devices and view states. For the management user with the second-level management scale, the user interface displayed by the terminal is as shown in FIG. 7. On the user interface, the management user may add or reduce PODs and view states. For example, such management users may focus on global resource usage, idle state, and so on.

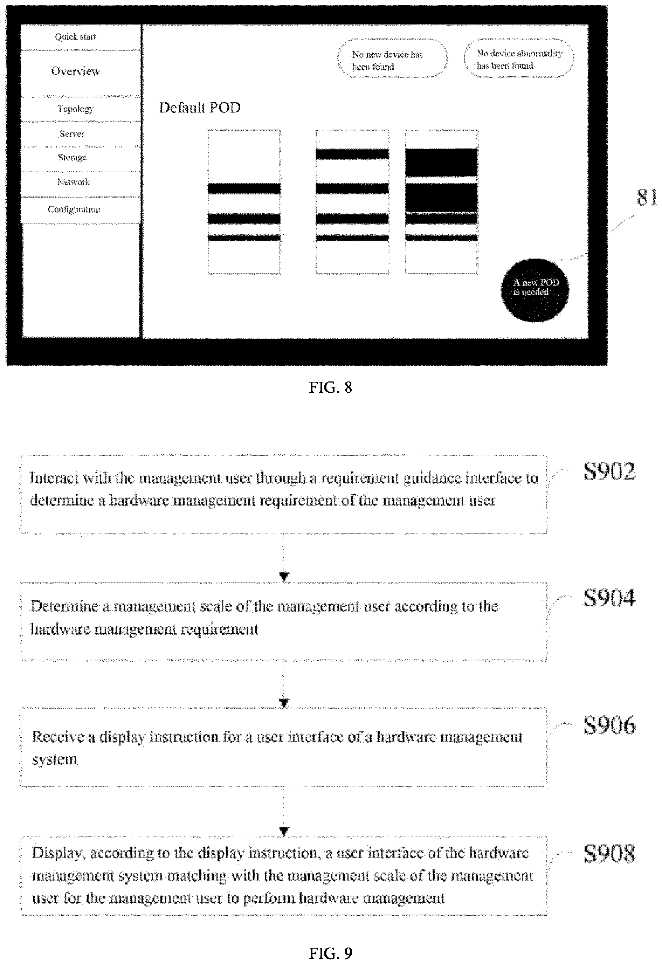

It is to be understood that the management user with a small management scale may have a gradually increasing requirement on hardware during use of the hardware. Therefore, the management scale may also gradually increase. Therefore, the management user with the small management scale may gradually grow into a user with a large management scale. Therefore, in some implementations of this embodiment, on the user interface with a smaller management scale, the management user may be provided with an entry to a user interface with a larger management scale. For example, as shown in FIG. 8, the largest hardware management object corresponding to the first-level management scale is a POD. However, on the user interface corresponding to the management scale, a third function item 81 is shown, which can be operated by the management user when he/she "needs a new POD", so as to jump to a user interface corresponding to the second-level management scale. The largest hardware management object corresponding to the second-level management scale is a POD set.

It may be understood that, there may be more than two levels of management scales. For example, in some implementations, the management scale is divided into N levels. If the first-level management scale is minimum, a user interface corresponding to an n^{th}-level management scale has an entry to a user interface corresponding to an (n+1)^{th}-level management scale, and the user interface corresponding to the (n+1)^{th}-level management scale has an entry to a user interface corresponding to an (n+2)^{th}-level management scale.

In the hardware management method according to this embodiment, different management users are provided with user interfaces matching with their management scales for hardware management, thereby avoiding management users with a small management scale and relatively weak professional knowledge from exposure to unnecessary professional concepts, and lowering the threshold of hardware management. Meanwhile, before providing the management user with the user interface for hardware management, the terminal may guide, through the requirement guidance interface, the management user to select a user interface he/she needs to enter. In this way, management users can be helped to find user interfaces suitable for their use without strict and standard management scale division for all management users, which reduces the difficulty in using the hardware management system, and enhances hardware management experience of the management users.

### Embodiment two

The above hardware management method will be further set forth in this embodiment in conjunction with implementations.

It may be understood that, in the implementation shown in FIG. 2, before the management user delivers the display instruction, the terminal cannot determine the management scale of the current management user, but shows the hardware management requirement characteristics corresponding to all the management scales to the management user to allow the management user to determine which category his/her hardware management requirement falls into and then to select a user interface matching with his/her management scale. Therefore, the terminal can determine the management scale corresponding to the management user according to a display instruction only after receiving the display instruction delivered by the management user.

In some other implementations of this embodiment, the terminal may determine the management scale of the management user before receiving the display instruction delivered by the management user. In this way, in the subsequent process, when receiving the display instruction delivered by the management user, the terminal can directly show the user interface matching with the management scale to the management user, which may refer to a flowchart shown in FIG. 9.

At step S902, a hardware management requirement of the management user is determined by interacting with the management user through a requirement guidance interface.

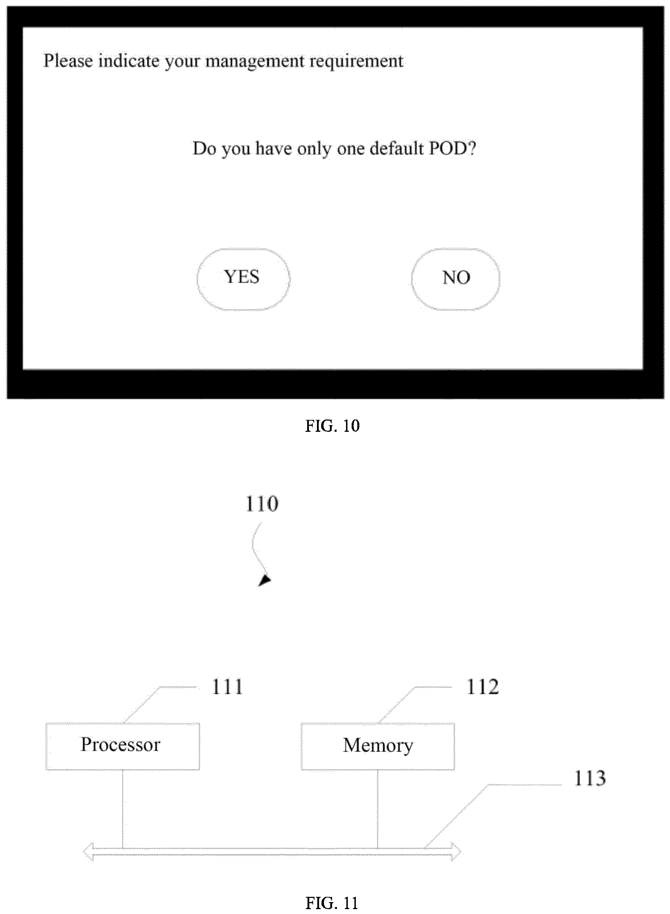

In this implementation, before receiving the display instruction delivered by the management user, the terminal may also show the requirement guidance interface to the management user. However, in this case, the terminal does not directly show all hardware management requirement characteristics to the management user to allow the management user to make a determination, but determines the management scale of the management user through prompts and inquiries. For example, on the requirement guidance interface shown in FIG. 10, the terminal may inquire the management user whether there is only one default POD. The management user may choose an answer based on his/her own hardware management requirement. For example, a management user b chooses a "No" option in FIG. 10.

At step S904, a management scale of the management user is determined according to the hardware management requirement.

After interacting with the management user on the requirement guidance interface, the terminal can determine the management scale of the current management user. For example, assuming that only a first-level management scale and a second-level management scale exist, and the largest hardware management object corresponding to the second-level management scale is larger than the largest hardware management object corresponding to the first-level management scale, the terminal may determine that the management user b choosing the "No" option belongs to the management user with the second-level management scale.

At step S906, a display instruction for a user interface of a hardware management system is received.

In the scheme, after the interaction, all management users can directly deliver display instructions through the same function item, so that the terminal can display corresponding user interfaces matching with their management scales. The terminal does not need to display different function items receiving display instructions according to different management scales. The management users do not need to select different function items to deliver the display instructions according to their own management requirements or management scales.

At step S908, a user interface of the hardware management system matching with the management scale of the management user is displayed.

Since the management scale of the current management user has been determined on the requirement guidance interface, the terminal can directly display a user interface matching with the management scale of the management user after receiving the display instruction for the user interface of the hardware management system. Specific display details and implementations can be obtained with reference to the introduction in the previous embodiment, which are not described in detail here.

In this embodiment, a user interface with a smaller management scale also has an entry to a user interface with a larger management scale. As shown in FIG. 8, the largest hardware management object corresponding to the first-level management scale is a POD. However, on the user interface corresponding to the management scale, a third function item 81 is shown, which can be operated by the management user when he/she "needs a new POD", so as to jump to a user interface corresponding to the second-level management scale. The largest hardware management object corresponding to the second-level management scale is a POD set.

The hardware management method according to this embodiment solves the problem of poor usability of the hardware management system caused by management users of different management scales using the same user interface to manage hardware, and on the basis of ensuring management requirements of the management users of a large management scale, reduces the difficulty in managing hardware by the management users of a small management scale and new management users, thereby improving overall user experience.

### Embodiment three

This embodiment provides a storage medium storing one or more computer programs that can be read, compiled, and executed by one or more processors. In this embodiment, the computer-readable storage medium may store a hardware management program which, when executed by one or more processors, causes the one or more processors to implement the process of any one of the hardware management methods described in the above embodiments.

This embodiment further provides a terminal. As shown in FIG. 11, the terminal 110 includes a processor 111, a memory 112 and a communication bus 113 connecting the processor 111 and the memory 112. The memory 112 may be the above storage medium storing the hardware management program. The processor 111 may read the hardware management program, compile, and execute the process of the hardware management method described in the above embodiment.

The processor 111 receives a display instruction for a user interface of a hardware management system, and displays, according to the display instruction, the user interface of the hardware management system matching with a management scale of a management user for the management user to perform hardware management. The largest hardware management objects on user interfaces corresponding to at least two management scales are different.

In some implementations of this embodiment, a user interface with a smaller management scale has an entry to a user interface with a larger management scale.

In some implementations, when a first-level management scale is minimum, a user interface corresponding to an n^{th}-level management scale has an entry to a user interface corresponding to an (n+1)^{th}-level management scale, n being greater than or equal to 1.

In some implementations of this embodiment, the management scale is divided into a first-level management scale and a second-level management scale, the largest hardware management object on a user interface corresponding to the first-level management scale is a POD, and the largest hardware management object on a user interface corresponding to the second-level management scale is a POD set.

In some scenarios, before receiving the display instruction for the user interface of the hardware management system, the processor 111 may first interact with the management user through a requirement guidance interface to determine a hardware management requirement of the management user, and determine a management scale of the management user according to the hardware management requirement.

In some other scenarios, before receiving the display instruction for the user interface of the hardware management system, the processor 111 may first display, on the requirement guidance interface, user interface entries corresponding to management scales of the hardware management system and hardware management requirement characteristics corresponding to the user interface entries.

When receiving the display instruction for the user interface of the hardware management system, the processor 111 may receive a display instruction delivered by the management user to the user interface entry corresponding to the hardware management requirement characteristic matching with a hardware management requirement of the management user.

In some implementations, on the requirement guidance interface, the user interface entry for a smaller management scale is displayed more prominently than the user interface entry for a larger management scale.

In some implementations of this embodiment, the processor 111 may highlight the user interface entry for a smaller management scale in any one of the following manners.
(1) Compared with the user interface entry for a larger management scale, the user interface entry for the smaller management scale is displayed at a position closer to a center of the requirement guidance interface.
(2) Compared with the user interface entry for a larger management scale, the user interface entry for the smaller management scale is displayed at a larger size.
(3) Compared with the user interface entry for a larger management scale, the user interface entry for the smaller management scale is displayed in higher brightness.
(4) Compared with the user interface entry for a larger management scale, the user interface entry for the smaller management scale is displayed in a brighter color. For example, the user interface entry for the larger management scale may be displayed in blue or gray, while the user interface entry for the smaller management scale may be displayed in bright red or yellow.

In the terminal according to this embodiment, for the management users with a small management scale, on the user interfaces corresponding thereto, there is no need to present function items corresponding to large hardware management objects that may not be used. Meanwhile, for the management users with a large management scale, a user interface with a large hardware management object can be used to perform hardware management to satisfy hardware management requirements of these management users with a large management scale. Therefore, with the hardware management method, the difficulty in hardware management for the management users with the small management scale can be reduced and hardware management experience of the management users with the small management scale can be improved while management requirements of management users with different management scales are taken into account.

The present application has the following beneficial effects.

A hardware management method, a terminal, and a storage medium are provided according to the embodiments of the present application. The terminal sets corresponding user interfaces for management users with different management scales, and the largest hardware management objects on the user interfaces corresponding to at least two management scales are different. When the management user uses the hardware management system for hardware management, the terminal receives a display instruction for a user interface of the hardware management system, and then displays, according to the display instruction, a user interface of the hardware management system matching with a management scale of the management user for the management user to perform hardware management. The hardware management system has at least two user interfaces with different largest hardware management objects. Therefore, for the management users with a small management scale, on the user interfaces corresponding thereto, there is no need to present function items corresponding to large hardware management objects that may not be used. Meanwhile, for the management users with a large management scale, a user interface with a large hardware management object can be used to perform hardware management to satisfy hardware management requirements of these management users with a large management scale. Therefore, with the hardware management method, the difficulty in hardware management for the management users with the small management scale can be reduced and hardware management experience of the management users with the small management scale can be improved while management requirements of management users with different management scales are taken into account.

Obviously, it would be appreciated by those having ordinary skill in the art that all or some of the steps in the methods and functional modules/units in the systems and apparatuses disclosed above may be implemented as software (which may be implemented using program code executable by a computing device), firmware, hardware, and any appropriate combination thereof. In hardware implementations, the division between the functional modules/units mentioned in the above description does not necessarily correspond to the division of physical components. For example, a physical component may have multiple functions, or a function or step may be performed by several physical components in cooperation. Some or all physical components may be implemented as software executed by processors, such as central processing units, digital signal processors, or microprocessors, or as hardware, or as integrated circuits, such as application-specific integrated circuits. Such software may be distributed over computer-readable media, executed by computing devices, and in some cases the steps shown or described may be performed in a different order than here. The computer-readable media may include computer storage media (or non-transient media) and communication media (or transient media). As is known to those having ordinary skill in the art, the term "computer storage media" includes volatile and non-volatile, removable and non-removable media implemented in any method or technology for storing information (such as computer-readable instructions, data structures, program modules or other data). The computer storage media include, but not limited to, a random access memory (RAM), a read-only memory (ROM), an electrically programmable ROM (EPROM), a flash memory or other memory technologies, a compact disc read-only memory (CD-ROM), a digital versatile disc (DVD) or other optical storages, a magnetic cassette, a magnetic tape, magnetic disk storage or other magnetic storage devices, or any other medium that can be configured for storing desired information and can be accessed by a computer. In addition, as is well known to those having ordinary skill in the art, a communication medium generally includes computer-readable instructions, data structures, program modules, or other data in a modulated data signal such as a carrier or other transmission mechanisms, and may include any information delivery medium. Therefore, the present application is not limited to any particular combination of hardware and software.

The above contents are further detailed descriptions about the embodiments of the present application, and the embodiments of the present application cannot be deemed to be limited to such descriptions. Those having ordinary skill in the art may also make some simple deductions or substitutions without departing from the idea of the present application, which should be regarded as falling into the protection scope of the present application.

## Claims

1. A hardware management method, comprising:
receiving a display instruction for a user interface of a hardware management system, the display instruction being configured to instruct displaying the user interface of the hardware management system to a current management user; and
displaying, according to the display instruction, the user interface of the hardware management system matching with a management scale of the management user for the management user to perform hardware management, at least two management scales corresponding to different largest hardware management objects on user interfaces.

2. The hardware management method of claim 1, wherein a user interface with a smaller management scale has an entry to a user interface with a larger management scale.

3. The hardware management method of claim 2, wherein in case that a first-level management scale is minimum, a user interface corresponding to an n^{th}-level management scale has an entry to a user interface corresponding to an (n+1)^{th}-level management scale, n being greater than or equal to 1.

4. The hardware management method of claim 1, wherein the management scale is divided into a first-level management scale and a second-level management scale, the largest hardware management object on a user interface corresponding to the first-level management scale is a point of deployment, POD, and the largest hardware management object on a user interface corresponding to the second-level management scale is a POD set.

5. The hardware management method of any one of claims 1-4, before receiving a display instruction for a user interface of a hardware management system, further comprising:
interacting with the management user through a requirement guidance interface to determine a hardware management requirement of the management user; and
determining a management scale of the management user according to the hardware management requirement.

6. The hardware management method of any one of claims 1-4,
wherein the method further comprises:
before receiving a display instruction for a user interface of a hardware management system,
displaying, on a requirement guidance interface, user interface entries corresponding to management scales of the hardware management system and hardware management requirement characteristics corresponding to the user interface entries; and
wherein receiving a display instruction for a user interface of a hardware management system comprises:
receiving a display instruction delivered by the management user to a user interface entry corresponding to a hardware management requirement characteristic matching with a hardware management requirement of the management user.

7. The hardware management method of claim 6, wherein, on the requirement guidance interface, a user interface entry for a smaller management scale is displayed more prominently than a user interface entry for a larger management scale.

8. The hardware management method of claim 7, wherein, compared with the user interface entry for the larger management scale, the user interface entry for the smaller management scale has at least one of:
a display position being closer to a center of the requirement guidance interface;
a larger display size; and
a higher display brightness.

9. A terminal, comprising a processor, a memory, and a communication bus;
wherein the communication bus is configured to communicate the processor with the memory; and
the processor is configured to execute one or more programs stored in the memory, to perform steps of the hardware management method of any one of claims 1-8.

10. A storage medium, storing one or more programs which, when executed by one or more processors, cause the one or more processors to perform steps of the hardware management method of any one of claims 1-8.
